# EUROPEAN PATENT APPLICATION

(11) **EP 4 459 905 A1**
(43) Date of publication of application: **06.11.2024**
(21) Application number: 22913073.7
(22) Date of filing: 28.04.2022
(51) Int. Cl.: H04L 1/00, H04L 5/00, H04W 72/04, H04W 52/02

(54) **CONFIGURATION METHOD, CHANNEL MONITORING METHOD, COMMUNICATION NODE AND STORAGE MEDIUM**

(30) Priority: 31.12.2021 CN 202111673935
(71) Applicant: ZTE Corporation, Shenzhen, Guangdong 518057 (CN)
(72) Inventor: SHA, Xiubin, Shenzhen, Guangdong 518057 (CN); DAI, Bo, Shenzhen, Guangdong 518057 (CN); LU, Ting, Shenzhen, Guangdong 518057 (CN); NIU, Li, Shenzhen, Guangdong 518057 (CN); TAN, Jie, Shenzhen, Guangdong 518057 (CN); GAO, Yuan, Shenzhen, Guangdong 518057 (CN)
(74) Representative: Vossius & Partner Patentanwälte Rechtsanwälte mbB
(86) International application number: PCT/CN2022/090048
(87) International publication number: WO 2023/123777

(57) **Abstract**

Disclosed are a configuration method, a channel monitoring method, a communication node, and a storage medium. The method includes: acquiring traffic information, the traffic information including a traffic cycle, a traffic burst arrival start time, and a traffic burst arrival end time (110); and sending configuration information relevant to physical downlink control channel (PDCCH) monitoring according to the traffic information, the configuration information being used for indicating a PDCCH monitoring occasion (120).

## Description

### CROSS-REFERENCE TO RELATED APPLICATIONS)

This application claims priority to Chinese Patent Application No. "202111673935.2" filed on December 31, 2021, which is incorporated by reference in its entirety.

### FIELD

This application relates to the technical field of wireless communication network, and for example, relates to a configuration method, a channel monitoring method, a communication node, and a storage medium.

### BACKGROUND

In a wireless communication system, configured grant (CG) resources and semi-persistent scheduling (SPS) strategies for user equipment (UE) energy conservation are only suitable for small-cycle services (with transmission intervals typically less than or equal to 640 ms) with determined transmission opportunities (with the determined start time and period of data packet transmission). For services with uncertain data packet transmission opportunities or large cycles, a discontinuous reception in RRC_CONNECTED state (C-DRX) mechanism is commonly used. However, in the current C-DRX, the DRX cycle can only be measured in ms and can only take a few discrete values. If the traffic cycle is not an integer multiple of ms or falls outside the value range of the DRX cycle, the C-DRX mechanism cannot be applied. If the traffic cycle is large (greater than 10240 ms), the C-DRX mechanism is also not applicable.

Furthermore, for DRX, the starting position of the DRX cycle is fixed within different radio frame cycles. However, for services with traffic cycles being not integer factors of 10240 ms, the starting positions of the DRX cycles within different radio frame cycles may vary. Therefore, the current DRX mechanism cannot be applicable to scenarios where the traffic cycle is not an integer factor of 10240 ms.

Similar problems also exist in the configuration of a PDCCH search space with respect to the C-DRX configuration.

### SUMMARY

This application provides a configuration method, a channel monitoring method, a communication node, and a storage medium.

An embodiment of this application provides a configuration method. The configuration method includes: acquiring traffic information, the traffic information including a traffic cycle, a traffic burst arrival start time, and a traffic burst arrival end time; and sending configuration information relevant to physical downlink control channel (PDCCH) monitoring according to the traffic information, the configuration information indicating a PDCCH monitoring occasion.

An embodiment of this application further provides a channel monitoring method, including: receiving configuration information relevant to PDCCH monitoring, the configuration information indicating a PDCCH monitoring occasion; and monitoring a PDCCH according to the configuration information.

An embodiment of this application further provides a communication node, including a memory, a processor, and a computer program stored on the memory and running on the processor. The processor, when executing the program, implements the above configuration method or the above channel monitoring method.

An embodiment of this application further provides a computer-readable storage medium. The computer-readable storage medium stores a computer program. The program, when executed by a processor, implements the above configuration method or the above channel monitoring method.

### BRIEF DESCRIPTION OF THE DRAWINGS

Fig. 1 is a flowchart of a configuration method according to an embodiment;
Fig. 2 is a flowchart of a channel monitoring method according to an embodiment;
Fig. 3 is a schematic diagram of acquiring traffic information according to an embodiment;
Fig. 4 is a schematic diagram of a DRX configuration mode according to an embodiment;
Fig. 5 is a schematic diagram of another DRX configuration mode according to an embodiment;
Fig. 6 is a schematic diagram of another DRX configuration mode according to an embodiment;
Fig. 7 is a schematic diagram of another DRX configuration mode according to an embodiment;
Fig. 8 is a schematic diagram of another DRX configuration mode according to an embodiment;
Fig. 9 is a schematic diagram of another DRX configuration mode according to an embodiment;
Fig. 10 is a schematic diagram of another DRX configuration mode according to an embodiment;
Fig. 11 is a schematic diagram of another DRX configuration mode according to an embodiment;
Fig. 12 is a schematic diagram of another DRX configuration mode according to an embodiment;
Fig. 13 is a schematic diagram of another DRX configuration mode according to an embodiment;
Fig. 14 is a structural schematic diagram of a configuration apparatus according to an embodiment;
Fig. 15 is a structural schematic diagram of a channel monitoring apparatus according to an embodiment; and
Fig. 16 is a schematic diagram of a hardware structure of a communication node according to an embodiment.

### DETAILED DESCRIPTION OF EMBODIMENTS

This application is described below in conjunction with the accompanying drawings and examples. It should be understood that the specific embodiments described herein are merely used for explaining this application rather than limiting this application. It should be noted that the embodiments in this application and features in the embodiments can be mutually combined without conflicts. In addition, it should be further noted that to facilitate the description, the accompanying drawings only illustrate part of structures relevant to this application rather than all structures.

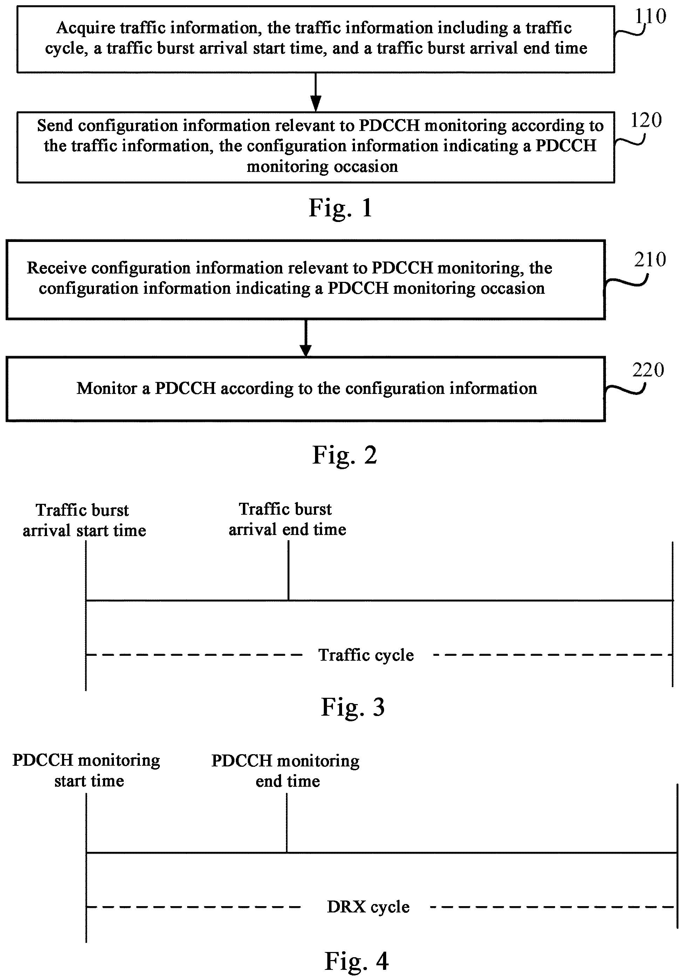

Fig. 1 is a flowchart of a configuration method according to an embodiment. As shown in Fig. 1, the method may be applied to a first communication node. The first communication node may be a base station-side node or a network-side node. The method provided in this embodiment includes step 110 and step 120.

In step 110, traffic information is acquired, and includes a traffic cycle, a traffic burst arrival start time, and a traffic burst arrival end time.

In step 120, configuration information relevant to PDCCH monitoring is sent according to the traffic information, and the configuration information indicates a PDCCH monitoring occasion.

In this embodiment, the first communication node acquires the traffic information, and the traffic information may include the traffic cycle, the traffic burst arrival start time, and the traffic burst arrival end time. Based on this, the first communication node sends, according to the acquired traffic information, the configuration information relevant to the PDCCH monitoring to a UE side, where the configuration information may indicates the PDCCH monitoring occasion.

In this embodiment, the PDCCH monitoring occasion can be indicated according to the traffic information configuration without the limitation from the traffic cycle, the monitoring flexibility is improved, and energy conservation can be achieved for terminals with uncertain data packet transmission occasions or large-cycle traffic, and traffic cycles being not integer multiples of 10240 ms.

In an embodiment, the configuration information is DRX configuration information, and indicates a PDCCH monitoring start time, a PDCCH monitoring end time, and a DRX cycle length.

In an embodiment, the PDCCH monitoring start time is indicated by a first specified position and a first time offset. The first specified position comprises a radio frame, a subframe, and/or a slot of the first transmission of a radio resource control (RRC) message or a medium access control (MAC) control element (CE) including configuration information, or the first specified position comprises a specified radio frame, subframe, and/or slot. The first time offset includes a time interval from the first specified position to the PDCCH monitoring start time. The PDCCH monitoring end time is indicated according to a second specified position and a second time offset, where the second specified position includes the first specified position or the PDCCH monitoring start time; and the second time offset includes a time interval from the second specified position to the PDCCH monitoring end time.

In an embodiment, the method further includes: configuring a periodic buffer status report (BSR) resource or a scheduling request (SR) indication resource within a PDCCH monitoring period; or, determining an effective occasion of the periodic BSR resource or SR indication resource based on the PDCCH monitoring period; or, indicating an effective time period of the periodic BSR resource or SR indication resource through the configuration information, and the PDCCH monitoring period is a predefined time period after receiving the BSR or SR.

The method further includes: in the case of receiving the BSR or the SR, scheduling resource of an uplink physical uplink shared channel (PUSCH) for carrying user plane data, where the periodic BSR resource or SR indication resource includes a periodic CG resource, a periodic contention-free physical random access channel (PRACH) resource, and/or an uplink physical signal for indicating allocation of an uplink grant resource for carrying user plane data.

In an embodiment, the method further includes: configuring the periodic BSR resource or SR indication resource within a period from the traffic burst arrival start time to the traffic burst arrival end time; and starting to monitor the PDCCH after a second communication node sends the BSR or SR, where the periodic BSR resource or SR indication resource includes a periodic CG resource, a periodic contention-free PRACH resource, and/or an uplink physical signal for indicating allocation of an uplink grant resource for carrying user plane data.

In an embodiment, the configuration information indicates a PDCCH monitoring start time and a DRX cycle length. The configuration information further indicates a PDCCH monitoring end time, or a PDCCH monitoring period, or DRX inactivity timing information.

In an embodiment, the configuration information indicates a PDCCH monitoring start time, DRX inactivity timing information, and a DRX cycle length.

In an embodiment, the configuration information includes a plurality of sets of DRX configurations. Each set of DRX configuration includes a DRX cycle length and a corresponding initial offset. The occasion of monitoring the PDCCH is the union of PDCCH monitoring occasion in individual DRX configuration.

In an embodiment, the configuration information includes a plurality of sets of DRX configurations. Each set of DRX configuration includes a PDCCH monitoring start time, a PDCCH monitoring end time, and a traffic cycle.

In an embodiment, the configuration information includes a DRX cycle and configuration information of a plurality of PDCCH monitoring periods within the DRX cycle. The configuration information of the plurality of PDCCH monitoring periods includes: a length of each PDCCH monitoring period, the number of the PDCCH monitoring periods, and/or an initial position of each PDCCH monitoring period.

In an embodiment, the configuration information includes a plurality of sets of DRX configurations. Each set of DRX configuration corresponds to a DRX-inactivity timer.

In an embodiment, the configuration information includes a DRX cycle and PDCCH monitoring periods with two lengths.

In an embodiment, the configuration information includes a DRX cycle, PDCCH monitoring periods with two lengths, and a ramping-down step for the PDCCH monitoring periods.

In an embodiment, the method further includes: sending, in the case of starting data transmission, a PDCCH channel or a transmission start indication, or a PDCCH monitoring start indication, or a wake up signal; and sending, in the case of stopping data transmission, a transmission end indication or a PDCCH monitoring end indication, or a sleep indication.

In an embodiment, the configuration information is a PDCCH search space configured by following parameters: a start time of the PDCCH search space, a PDCCH monitoring period, and a cycle of the PDCCH search space.

In an embodiment, the configuration information is a PDCCH search space configured by following parameters: a PDCCH monitoring period and a cycle of the PDCCH search space. The start time of the PDCCH search space is the moment when the UE sends the BSR or SR, or an occasion when the UE sends the BSR or SR and a predefined period elapses thereafter.

In an embodiment, acquiring traffic information includes: acquiring the traffic information according to quality of service (QoS) parameters transmitted by a core network; or, acquiring the traffic information according to assistance information of the terminal, an uplink RRC message, and/or an uplink MAC CE structure.

An embodiment of this application further provides a channel monitoring method. Fig. 2 is a flowchart of a channel monitoring method according to an embodiment. As shown in Fig. 2, the method may be applied to a second communication node. The second communication node may be a UE-side node. The method provided in this embodiment includes step 210 and step 220.

In step 210, configuration information relevant to PDCCH monitoring is received, and the configuration information indicates a PDCCH monitoring occasion.

In step 220, the PDCCH is monitored according to the configuration information.

In this embodiment, the UE side receives the configuration information relevant to the PDCCH monitoring sent by a base station side, where the configuration information indicates the PDCCH monitoring occasion; and based on this, the UE side can monitor the PDCCH according to the configuration information.

In this embodiment, the second communication node can monitor the PDCCH according to the PDCCH monitoring occasion indicated by the configuration information without the limitation from the traffic cycle, the monitoring flexibility is improved, and energy conservation can be achieved for terminals with uncertain data packet transmission opportunities or large-cycle traffic, and traffic cycles being not integer multiples of 10240 ms.

In an embodiment, the configuration information is configuration information for DRX, and the configuration information indicates a PDCCH monitoring start time, a PDCCH monitoring end time, and a DRX cycle length.

Monitoring the PDCCH according to the configuration information includes: within each DRX cycle, monitoring the PDCCH within a specified time interval or monitoring the PDCCH according to a first PDCCH search space, and not monitoring the PDCCH within a non-specified time interval or monitoring the PDCCH according to a second PDCCH search space; or within each DRX cycle, staring to monitor the PDCCH after sending a BSR or RS.

The specified time interval is from a PDCCH monitoring start time to the completion of data packet transmission, or from the PDCCH monitoring start time to a PDCCH monitoring end time, or from sending the BSR or SR to the completion of data packet transmission, or from sending the BSR or SR to the PDCCH monitoring end time.

In an embodiment, a start time of an Nth DRX cycle is one of the following: the sum of a start time of a first DRX cycle and a result of flooring N-1 traffic cycles; the sum of the start time of the first DRX cycle and a result of ceiling the N-1 traffic cycles; the sum of the start time of the first DRX cycle and an integer closest to the N-1 traffic cycles; a result of flooring the sum of the start time of the first DRX cycle and the N-1 traffic cycles; a result of ceiling the sum of the start time of the first DRX cycle and the N-1 traffic cycles; and a DRX integer cycle position closest to the sum of the start time of the first DRX cycle and the N-1 traffic cycles.

In an embodiment, the configuration information is indicates a PDCCH monitoring start time and a DRX cycle length. The configuration information further indicates a PDCCH monitoring end time, or a PDCCH monitoring period, or DRX inactivity timing information.

In an embodiment, monitoring a PDCCH according to configuration information includes: within each DRX cycle, starting to monitor the PDCCH from a PDCCH monitoring start time, and stopping monitoring the PDCCH until any one of the following conditions is satisfied: the PDCCH is monitored after the PDCCH monitoring start time, and a DRX-inactivity timer is turned on after receiving or feeding back hybrid automatic repeat request (HARQ) acknowledge (ACK) information; the PDCCH is monitored in a timing period of the DRX-inactivity timer, and the DRX-inactivity timer is restarted after receiving or feeding back the HARQ ACK; the PDCCH is not monitored within the timing period of the DRX-inactivity timer, and the DRX-inactivity timer times out; and the PDCCH monitoring end time expires, and the PDCCH is not monitored.

In an embodiment, the configuration information indicates a PDCCH monitoring start time, DRX inactivity timing information, and a DRX cycle length.

In an embodiment, the method further includes one of the following, within each DRX cycle: in a case that the PDCCH is monitored, the DRX-inactivity timer is started after receiving or feeding back the HARQ ACK; in a case that the PDCCH is monitored within the timing period of the DRX-inactivity timer, the DRX-inactivity timer is restarted after receiving or feeding back the HARQ ACK; and in a case that the PDCCH is not monitored within the timing period of the DRX-inactivity timer, monitoring the PDCCH is stopped after the DRX-inactivity timer times out.

In an embodiment, the configuration information includes a plurality of sets of DRX configurations.

Monitoring the PDCCH according to configuration information includes: monitoring the PDCCH at a PDCCH monitoring occasion included in individual DRX configuration.

In an embodiment, the configuration information includes configuration information for a first DRX cycle and configuration information for second DRX cycles, where the first DRX cycle includes multiple second DRX cycles.

Monitoring the PDCCH according to configuration information includes, within each first DRX cycle: monitoring, for an overlapping region of a PDCCH monitoring period within the first DRX cycle and a PDCCH monitoring period within the second DRX cycle, the PDCCH from the start occasion of an earlier starting PDCCH monitoring period to the end occasion of a later ending PDCCH monitoring period; and monitoring, for a non-overlapping region, the PDCCH according to the PDCCH monitoring period included in the second DRX cycle.

In an embodiment, the configuration information includes a DRX cycle, a first PDCCH monitoring period, and a second PDCCH monitoring period.

Monitoring a PDCCH according to configuration information includes: before receiving a PDCCH channel or a transmission start indication or a PDCCH monitoring start indication, or a wake up signal, monitoring the PDCCH within the first PDCCH monitoring period; and after receiving the PDCCH channel or the transmission start indication or the PDCCH monitoring start indication, or the wake up signal, monitoring the PDCCH within the second PDCCH monitoring period until a transmission end indication or a PDCCH monitoring end indication or a sleep indication is received.

Alternatively, monitoring the PDCCH according to configuration information includes: before receiving the transmission start indication or the PDCCH monitoring start indication, or the wake up signal, monitoring the PDCCH within the first PDCCH monitoring period; and after receiving the transmission start indication or the PDCCH monitoring start indication, or the wake up signal, monitoring the PDCCH within the first PDCCH monitoring period and the second PDCCH monitoring period.

Alternatively, monitoring the PDCCH according to configuration information includes: within a first DRX cycle after receiving the transmission start indication or the PDCCH monitoring start indication, or the wake up signal, monitoring the PDCCH within the first PDCCH monitoring period, and monitoring the PDCCH within the second PDCCH monitoring period within each DRX cycle other than the first DRX cycle.

Alternatively, monitoring the PDCCH according to configuration information includes: within the first DRX cycle, monitoring the PDCCH within the first PDCCH monitoring period, and within the second DRX cycle, monitoring the PDCCH within the second PDCCH monitoring period.

Alternatively, monitoring the PDCCH according to configuration information includes: in a case that data is successfully received within one DRX cycle, monitoring the PDCCH within the first PDCCH monitoring period and the second PDCCH monitoring period; or, monitoring the PDCCH within the second PDCCH monitoring period.

Alternatively, monitoring the PDCCH according to configuration information includes: monitoring the PDCCH within the first PDCCH monitoring period, and in a case that the PDCCH is detected or the data is successfully received or a PDCCH corresponding to a PDSCH is detected, monitoring the PDCCH within the first PDCCH monitoring period and the second PDCCH monitoring period; or, monitoring the PDCCH within the second PDCCH monitoring period.

The first DRX cycle includes one or more DRX cycles, and the second DRX cycle includes one or more DRX cycles.

In an embodiment, the configuration information includes a DRX cycle, PDCCH monitoring periods with two lengths, and a ramping-down step for the PDCCH monitoring periods.

Monitoring the PDCCH according to configuration information includes: before receiving the PDCCH channel or the transmission start indication or the PDCCH monitoring start indication, or the wake up signal, monitoring the PDCCH according to a shorter one PDCCH monitoring period of the PDCCH monitoring periods with two lengths; within the first DRX cycle after receiving the PDCCH channel or the transmission start indication or the PDCCH monitoring start indication, or the wake up signal, monitoring the PDCCH according to a longer one PDCCH monitoring period of the PDCCH monitoring periods with two lengths, and monitoring the PDCCH using the corresponding PDCCH monitoring period with a specified length within each DRX cycle other than the first DRX cycle; in a case that a data transmission stop indication is received, monitoring the PDCCH according to the shorter PDCCH monitoring period. In a case that the data is successfully received within any DRX cycle, the specified length corresponding to the next DRX cycle of the DRX cycle is a result obtained by subtracting a ramping-down step from the length of the PDCCH monitoring period within the DRX cycle. In a case that the data is not successfully received within any DRX cycle and the data transmission stop indication is not received, the specified length corresponding to the next DRX cycle of the DRX cycle is recovered to the longer one of the two lengths. In a case that the specified length corresponding to each DRX cycle is greater than or equal to the shorter one of the two lengths.

In an embodiment, monitoring the PDCCH according to configuration information includes: within the PDCCH monitoring period of each DRX cycle, stating to monitor a PDCCH satisfying a conditions from a start position of a first PDCCH search space, and the PDCCH satisfying the condition include a PDCCH with a search space start position falling within the PDCCH monitoring period of the corresponding DRX cycle.

In an embodiment, the method further includes: determining the PDCCH search space according to following parameters: a PDCCH search space start time, a PDCCH monitoring period, and a PDCCH search space cycle.

The above configuration method and the above channel monitoring method are described through different embodiments below.

### Embodiment 1

Fig. 3 is a schematic diagram of acquiring traffic information according to an embodiment. The base station acquiring traffic information may include: acquiring the traffic information according to QoS parameters transmitted by a core network; or acquiring the traffic information according to assistance information of a terminal, an uplink RRC message, and/or an uplink MAC CE structure. The traffic information may include a traffic cycle, a traffic burst arrival start time, and a traffic burst arrival end time. As shown in Fig. 3, a traffic pattern of a periodic traffic with uncertain arrival time (large jitter range) is described. The core network or UE notifies the base station of a traffic period (i.e., Period), a traffic burst arrival start time (i.e., Burst Arrival Start Time), and a traffic burst arrival end time (i.e., Burst Arrival End Time).The traffic burst arrival start time and the traffic burst arrival end time may be characterized by a traffic burst arrival time (i.e., Burst Arrival Time) and a traffic arrival time fluctuation range (i.e., Burst Arrival Time Spread or Burst Arrival Time Jitter).For example: traffic burst arrival start time = traffic burst arrival time - traffic arrival time fluctuation range; and traffic burst arrival end time = traffic burst arrival time + traffic arrival time fluctuation range.

Alternatively, traffic burst arrival start time = traffic burst arrival time - traffic arrival time fluctuation range/2; and traffic burst arrival end time = traffic burst arrival time + traffic arrival time fluctuation range/2.

Fig. 4 is a schematic diagram of a DRX configuration mode according to an embodiment. As shown in Fig. 4, based on the traffic pattern provided by the core network or UE in Fig. 3, a connection mode DRX cycle configured to the UE by the base station is taken as an example. Configuration information is configuration information for DRX. The base station configures the following for the UE in a RRC connection mode: a start time of a PDCCH monitoring (i.e., PDCCH Monitoring Start Time), an end time of a PDCCH monitoring (i.e., PDCCH Monitoring End Time), and a DRX cycle length. Within a DRX cycle, the UE needs to monitor the PDCCH within the specified time interval or monitor the PDCCH according to a first PDCCH search space (with a smaller PDCCH monitoring cycle) during the time interval (i.e., specified time interval) from the PDCCH monitoring start time to the completion of uplink/downlink data packet transmission or during the time interval (i.e., specified time interval) from the PDCCH monitoring start time to the PDCCH monitoring end time (the earlier time is the reference, for example, if the uplink/downlink data packet transmission completion time is earlier than the PDCCH monitoring end time, the specified time interval corresponding to the completion of uplink/downlink data packet transmission is used as the reference). In addition, the UE does not need to monitor the PDCCH or monitors the PDCCH according to a second PDCCH search space (with a larger PDCCH monitoring cycle) during the non-specified time interval.

The PDCCH monitoring start time corresponds to the traffic burst arrival start time; the PDCCH monitoring end time corresponds to the traffic burst arrival end time offset backward by one time quantity (i.e., Time Offset); and the time quantity retransmission delay considering the traffic scheduling and HARQ ACK/NACK delay, where NACK is non acknowledge information (i.e., Non ACKnowledge); and the DRX cycle corresponds to a traffic cycle.

The DRX cycles configured to the UE by the base station may be in one-to-one correspondence with traffic patterns of the UE. In this case, a traffic cycle value range is required to be completely consistent with a DRX cycle value range. For example, the DRX cycle may be measured in Hertz (Hz), frames per second (fps), milliseconds (ms), or microseconds (us), and may be a cycle characterized by any integer value within the value range.

Considering matching with the traffic pattern and explicit configuration (rather than being calculated) of the PDCCH monitoring start time and end time by the base station, the value range of the DRX cycle is not constrained by one system frame number (SFN) cycle (i.e., 10240 ms), which may be longer than one SFN cycle. The UE may calculate a start time of a next DRX cycle through a timer (an end time of a previous DRX cycle is the start time of the next DRX cycle).

If the traffic cycle is not an integer multiple of 1 ms, the start time of the Nth DRX cycle=Floor (start time of the first DRX cycle + (N-1) * Period). In other words, the start time of the Nth DRX cycle is a result of flooring the sum of the start time of the first DRX cycle and N-1 traffic cycles. Floor may represent flooring, N may represent the Nth DRX cycle, and Period may represent the traffic cycle or the DRX cycle length, which needs to be converted into the basic unit of the DRX cycle length (e.g., ms, slot, or symbol) during calculation.

The start time of the Nth DRX cycle may also be calculated according to the following: the start time of the Nth DRX cycle=Ceil (the start time of the first DRX cycle +(N-1)* Period), that is, the start time of the Nth DRX cycle may be a result of ceiling the sum of the start time of the first DRX cycle and the N-1 traffic cycles.

Alternatively, the start time of the Nth DRX cycle=Round (the start time of the first DRX cycle +(N-1)* Period), that is, the start time of the Nth DRX cycle may be a DRX integer cycle position closest to the sum of the start time of the first DRX cycle and the N-1 traffic cycles.

Alternatively, the start time of the Nth DRX cycle=the start time of the first DRX cycle+Floor ((N-1)* Period), that is, the start time of the Nth DRX cycle may be the sum of the start time of the first DRX cycle and a result of flooring the lengths of the N-1 traffic cycles.

Alternatively, the start time of the Nth DRX cycle=the start time of the first DRX cycle+Ceil ((N-1)* Period), that is, the start time of the Nth DRX cycle may be the sum of the start time of the first DRX cycle and a result of ceiling the lengths of the N-1 traffic cycles.

Alternatively, the start time of the Nth DRX cycle=the start time of the first DRX cycle+Round ((N-1)* Period), that is, the start time of the Nth DRX cycle may be the sum of the start time of the first DRX cycle and a DRX integer cycle closest to the lengths of the N-1 traffic cycles.

Ceil represents ceiling, and Round represents rounding to the nearest integer.

The cycle unit ms of the DRX cycle may also be frame, subframe, slot, or symbol. In other words, the traffic cycle is first converted into the cycle unit of the DRX cycle, and flooring, ceiling, or rounding is performed to the start time with the cycle unit of the DRX cycle.

If the traffic occurrence frequency is characterized by Hz or fps, reciprocal transformation may be performed to obtain a corresponding traffic cycle. For example, the traffic cycle corresponding to x HZ is (1/x) s, and then may be converted into ms, symbol, or slot on that basis. Since 1ms =1 subframe, using ms and subframe as units are equivalent.

Related methods may also be applied to configuration strategies for CG or SPS. For example, in scenarios such as an industrial Internet of things (IIoT) and extended reality (XR), the traffic cycle may not be an integer multiple of ms. For example, in the IIoT, Hz typically represents the traffic occurrence frequency, and the reciprocal (1/x Hz) of x Hz represents the corresponding traffic cycle. In image processing such as XR, the fps (i.e., frame per second) typically represents the traffic occurrence frequency, and the reciprocal (1/x fps) of x fps represents the corresponding traffic cycle. A frequency of 60 Hz or 10 fps corresponds to a cycle of 16.667 ms, and a frequency of 120 Hz or 8.333 fps corresponds to a cycle of 8.333 ms. The non-integer cycle cannot be matched with the CG or SPS cycle. In this case, the CG or SPS cycle may be configured based on an actual traffic cycle (Hz, fps, or a non-integer value). If the traffic cycle is not an integer multiple of 1 ms, the start time of the Nth CG or SPS=Floor (start time of the first CG or SPS + (N-1) * Period), the start time of the Nth CG or SPS=Ceil (start time of the first CG or SPS + (N-1) * Period), and alternatively, the start time of the Nth CG or SPS=Round (start time of the first CG or SPS + Round ((N-1) * period). Floor represents flooring, Ceil represents ceiling, and Round represents rounding to the nearest integer. N represents the Nth DRX cycle, and Period represents an actual traffic cycle, which needs to be converted into the basic unit of the CG or SPS cycle (e.g., ms, slot, or symbol) during calculation.

The PDCCH monitoring start time may be represented relative to the first specified position (e.g., a certain SFN, subframe, and/or slot) and a first time offset (e.g., time offset 2, i.e., TimeOffset 2). Specifically, SFN, subframe, and/or slot refer to a radio frame, a subframe, and/or a slot of the initial transmission of the RRC message or MAC CE configuring the C-DRX, or a radio frame, a subframe, and/or a slot specified by the RRC message or MAC CE configuring the C-DRX. The time offset 2 (i.e., TimeOffset2) is a time interval from the first specified position to the PDCCH monitoring start time.

The PDCCH monitoring end time may be represented relative to the second specified position (e.g., a certain SFN, subframe, and/or slot) and the second time offset (e.g., time offset 3, i.e., TimeOffset 3). Specifically, the second specified position includes the first specified position or the PDCCH monitoring start time. The time offset 3 (i.e., TimeOffset3) is a time interval (i.e., On-Duration) from the second specified position to the PDCCH monitoring end time.

Within the On-Duration period (i.e., the PDCCH monitoring period) from the traffic burst arrival start time to the traffic burst arrival end time, the base station configures the periodic BSR resource or SR indication resource to the UE, such that the UE requests uplink grant (UL Grant) in time; and the base station receives the BSR or SR to schedule resources of the uplink PUSCH for carrying the user plane data, thereby reducing the uplink transmission delay. In other words, the SR indication resource within the On-Duration period is only applicable to a scenario with a fixed message size. After receiving the SR, the base station may acquire the size of a UL Grant resource to be allocated without the need for the UE to report the BSR again. The periodic BSR resource or SR indication resource may include a periodic CG resource, a periodic non-contention PRACH resource, or an uplink physical signal for indicating the base station to allocate the UL Grant resource.

Alternatively, the configuration information includes a periodic BSR resource or SR indication effective time period, and the PDCCH monitoring period is a predefined time period after receiving the BSR or SR.

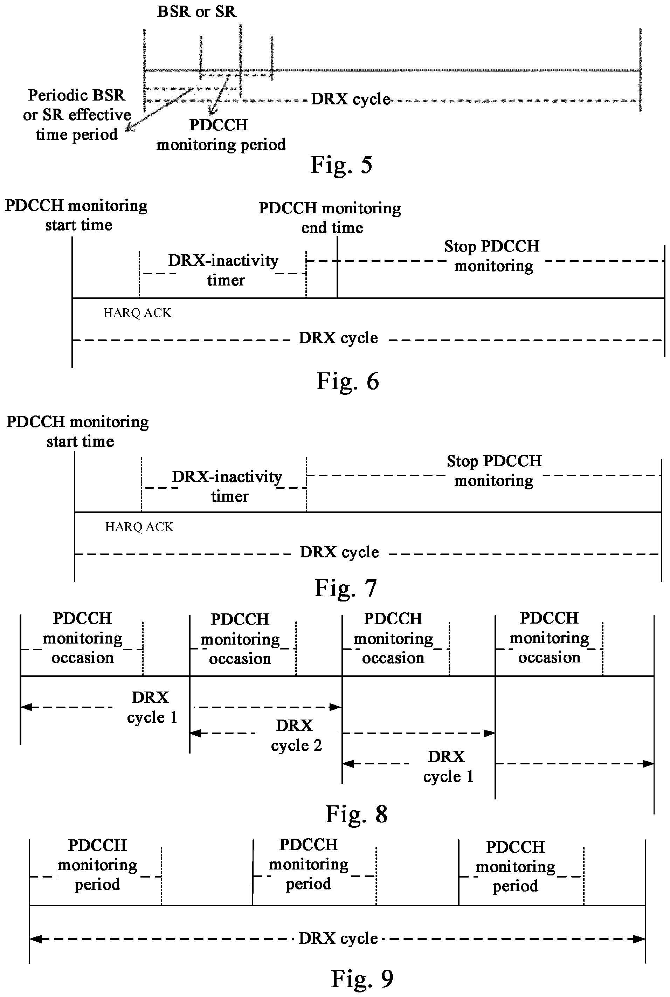

Fig. 5 is a schematic diagram of another DRX configuration mode according to an embodiment. As shown in Fig. 5, based on the traffic pattern provided by the core network or UE in Fig. 3, a connection mode DRX cycle configured to the UE by the base station is taken as an example. The configuration information is DRX configuration information. The base station configures the following for the UE in an RRC connection mode: a periodic BSR or SR effective occasion and a DRX cycle length. Within one DRX cycle, the UE starts to monitor the PDCCH after sending the BSR or SR. Within the time interval (i.e., specified time interval) from the PDCCH monitoring start time to the completion of uplink/downlink data packet transmission, the UE needs to monitor the PDCCH within the specified time interval or monitors the PDCCH according to the first PDCCH search space (with a smaller PDCCH monitoring cycle); and in addition, the UE does not need to monitor the PDCCH within the non-specified time interval or monitors the PDCCH according to the second PDCCH search space (with a larger PDCCH monitoring cycle). The calculation of the DRX cycle is the same as shown in Fig. 4.

The specified time interval may also be from the transmission of the BSR or SR to the completion of data packet transmission, or from the transmission of the BSR or SR to the PDCCH monitoring end time.

The completion of data packet transmission refers to the completion of a HARQ ACK process and/or a RLC ACK process for data transmission, which means that the ACK acknowledge for the data packet transmission is received, and there is no immediate subsequent data transmission, or there is no more data transmission within the current DRX cycle.

### Embodiment 2

Fig. 6 is a schematic diagram of another DRX configuration mode according to an embodiment. A connection mode DRX support for a periodic traffic with uncertain arrival time (large jitter range) and an uncertain data packet size is described as shown in Fig. 6. The base station configures the UE with the PDCCH monitoring start time, the DRX cycle length, as well as the PDCCH monitoring end time, or PDCCH monitoring period (i.e., On-Duration), or DRX inactivity timing information (i.e., DRX-Inactivity Timer).

Within each DRX cycle, the UE starts to monitor the PDCCH from the PDCCH monitoring start time, and when any one of the following conditions is satisfied, the UE stops monitoring the PDCCH until the beginning of the next DRX cycle (the start position of the next DRX cycle = the start position of the previous DRX cycle (i.e., PDCCH Monitoring Start Time)+DRX cycle):
the PDCCH monitoring start time may be a C-DRX start time, which may be a certain specified occasion within the C-DRX, or a occasion that occurs after a predefined time period offset backwards from the C-DRX start time. The specified occasion or predefined time period offset is predefined by a standard or configured by the base station;
the PDCCH is monitored after the PDCCH monitoring start time, and after the HARQ ACK is received or fed back, a DRX-inactivity timer is started;
the PDCCH is monitored within the timing period of the DRX-inactivity timer, and the DRX-inactivity timer is restarted after the HARQ ACK is received or fed back;
the PDCCH is not monitored within the timing period of the DRX-inactivity timer, and the DRX-inactivity timer times out; and
the PDCCH monitoring end time expires, and the PDCCH is not monitored.

Fig. 7 is a schematic diagram of another DRX configuration mode according to an embodiment. A connection mode DRX support for a periodic traffic with uncertain arrival time (large jitter range) and an uncertain data packet size is described as shown in Fig. 7.The base station configures the UE with the PDCCH monitoring start time, the DRX inactivity timing information, and the DRX cycle length (there is no explicit configuration of the PDCCH monitoring end time).

The UE starts to monitor the PDCCH within the DRX cycle from the PDCCH monitoring start time until the PDCCH is monitored.

If the PDCCH is monitored, the DRX-inactivity timer is started after the HARQ ACK is received or fed back.

If the PDCCH is monitored within the timing period of the DRX-inactivity timer, the DRX-inactivity timer is restarted after the HARQ ACK is received or fed back.

The PDCCH is not monitored within the timing period of the DRX-inactivity timer, and after the DRX-inactivity timer times out, monitoring the PDCCH is stopped until the starting of the next DRX cycle (the start position of the next DRX cycle = the start position of the previous DRX cycle (i.e., PDCCH Monitoring Start Time)+DRX cycle).

It should be noted that Fig. 7 may be considered as a special case of Fig. 6, where there is no configuration for the PDCCH monitoring end time, or it may be understood that the PDCCH monitoring end time overlaps with the DRX cycle end time.

### Embodiment 3

The existing DRX cycle may only take several discrete values, as follows:

DRX-shortcycle , such as {ms2, ms3, ms4, ms5, ms6, ms7, ms8, ms10, ms14, ms16, s20, ms30, ms32, ms35, ms40, ms64, ms80, ms128, ms160, ms256, ms320, ms512, ms640, spare9, spare8, spare7, spared, spared, spare4, spare3, spare2, spare1}; and
DRX-longcyclestartoffset, such as {ms10 INTEGER(0...9), ms20 INTEGER(0...19), ms32 INTEGER(0...31), ms40 INTEGER(0...39), ms60 INTEGER(0...59), ms64 INTEGER(0...63), ms70 INTEGER(0...69), ms80 INTEGER(0...79), ms128 INTEGER(0...127), ms160 INTEGER(0...159), ms256 INTEGER(0...255), ms320 INTEGER(0...319), ms512 INTEGER(0...511), ms640 INTEGER(0...639), ms1024 INTEGER(0... 1023), ms1280 INTEGER(0...1279), ms2048 INTEGER(0...2047), ms2560 INTEGER(0...2559), ms5120 INTEGER(0...5119), ms10240 INTEGER(0... 10239)}. INTEGER may represent taking an integer.

If a DRX parameter with a DRX cycle of 15 ms (i.e., a DRX cycle length of 15 ms) needs to be configured, the current standard does not support it. Apart from adopting the methods in Embodiment 1 and Embodiment 2, it is also possible to map standard-unsupported DRX cycle values using a plurality of DRX cycles.

For example, if a DRX parameter with a DRX cycle of 15 ms and a corresponding start offset (i.e., StartOffset) of 1 ms needs to be configured, it may be achieved through the following two DRX parameter configurations:
DRX Configuration 1: DRX cycle = 30 ms, Start Offset = 1 ms; and
DRX Configuration 2: DRX cycle = 30 ms, Start Offset = 16 ms;

Alternatively, it may also be achieved through following four DRX parameter configurations:
DRX Configuration 1: DRX cycle = 30 ms, Start Offset = 1 ms;
DRX Configuration 2: DRX cycle = 30 ms, Start Offset = 16 ms;
DRX Configuration 3: DRX cycle = 30 ms, Start Offset = 33 ms; and
DRX Configuration 4: DRX cycle = 30 ms, Start Offset = 49 ms.

It should be noted that if the UE is configured with a plurality of DRX configurations, each DRX configuration may include the DRX cycle length and the corresponding start offset, and the occasion that the UE monitors the PDCCH may be the union of PDCCH monitoring occasions within the plurality of DRX configurations, and in other words, as long as there is one DRX configuration that requires monitoring the PDCCH, the UE monitors the PDCCH.

Fig. 8 is a schematic diagram of another DRX configuration mode according to an embodiment. As shown in Fig. 8, an illustrative description is made by adopting two DRX configurations to map a small DRX cycle. In Fig. 8, DRX cycle 1 length = DRX cycle 2 length = 30 ms; and the start position of the DRX cycle 2 falls in the middle of the DRX cycle 1. Based on this, two DRX configurations with DRX cycle lengths of 30 ms may be used to map out the PDCCH monitoring occasion of one DRX cycle.

The UE monitors the PDCCH at the PDCCH monitoring occasion included in individual DRX configuration. In Fig. 8, the first On-Duration is the PDCCH monitoring occasion of DRX cycle 1; the second On-Duration is the PDCCH monitoring occasion of DRX cycle 2; the third On-Duration is the next PDCCH monitoring occasion of DRX cycle 1; the fourth On-Duration is the next PDCCH monitoring occasion of DRX cycle 2; and so on.

In addition, the plurality of sets of DRX configurations may also be used for DRX configurations of non-integer cycles. For example, the traffic arrival start time is 0hh0mm0ss0ms, the traffic arrival end time is 0hh0mm0ss1ms, the traffic cycle is 60 fps (=16.667 ms). Since the DRX cycle is measured in ms, it is difficult to map the traffic cycle to a single C-DRX configuration. In this case, the traffic pattern may be split into a plurality of C-DRX configurations with integer cycles. Table 1 shows a corresponding relationship between C-DRX configuration 1 and C-DRX parameters. As shown in Table 1, the UE is configured with the following 3 C-DRX parameters to map the traffic pattern:

**Table 1 Corresponding relationship between C-DRX configuration 1 and C-DRX parameters**

| | PDCCH monitoring start time | PDCCH monitoring end time | Traffic cycle |
|---|---|---|---|
| C-DRX configuration 1 | 0hh0mm0ss0ms | 0hh0mm0ss1ms | 50 ms |
| C-DRX configuration 1 | 0hh0mm0ss17ms | 0hh0mm0ss18ms | 50 ms |
| C-DRX configuration 1 | 0hh0mm0ss34ms | 0hh0mm0ss35ms | 50 ms |

Fig. 9 is a schematic diagram of another DRX configuration mode according to an embodiment. As shown in Fig. 9, adopting one DRX including a plurality of On-Duration occasions to map a DRX with a traffic cycle that is not an integer multiple of 1 ms is described. The base station configures the UE with configuration information about one DRX cycle and a plurality of On-Durations (which may also be understood as PDCCH monitoring periods) within the DRX cycle. The plurality of On-Durations include: an On-Duration length, the number of On-Durations, and/or the start position of the individual On-Duration.

The On-Duration lengths of the plurality of On-Durations may be the same (the plurality of On-Durations within one DRX cycle share a common On-Duration length). Alternatively, the On-Duration lengths of the plurality of On-Durations are different (the plurality of On-Durations within one DRX cycle correspond to a list of On-Duration lengths).

The start positions of the plurality of On-Durations within one DRX cycle may be explicitly indicated by the base station, or the start position of the first On-Duration may be explicitly indicated, and the start positions of the remaining On-Durations may be calculated based on the start position of the first On-Duration at regular intervals.

In Fig. 9, one DRX cycle includes 3 On-Durations; the start position of the first On-Duration is the start position of the DRX cycle.

The start positions of the subsequent two On-Durations are calculated based on the start position of the first On-Duration. For example: the start position of the second On-Duration = the start position of the first On-Duration + Floor(DRX cycle)/3; and the start position of the third On-Duration = the start position of the first On-Duration + Floor(DRX cycle) * 2/3.

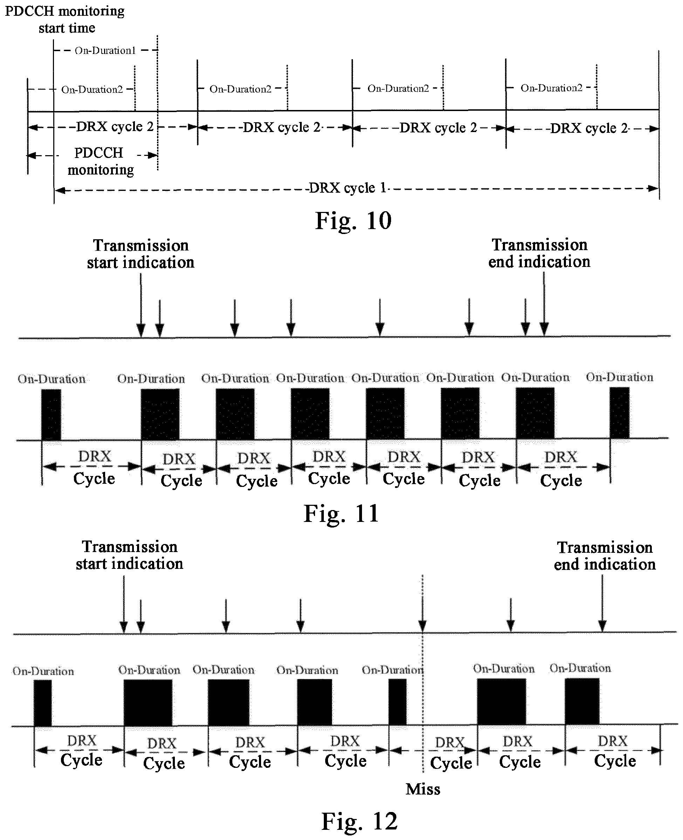

Fig. 10 is a schematic diagram of another DRX configuration mode according to an embodiment. As shown in Fig. 10, the simultaneous configuration of a DRX with a specified DRX cycle start occasion and a Legacy DRX cycle is described. This embodiment shows in a case of a plurality of sets of DRX configurations: each set of DRX configuration corresponds to one DRX-inactivity timer, and the DRX-inactivity timer corresponding to individual set of DRX configurations is activated independently. The PDCCH monitoring occasion is the union of the PDCCH monitoring occasions from the plurality of sets of DRX configurations.

In Fig. 10: the base station configures the UE with a DRX cycle 1 (i.e., the first DRX cycle), a corresponding PDCCH monitoring start time, and On-Duration1. The base station configures the UE with a DRX cycle 2 (i.e., the second DRX cycle) and a corresponding On-Duration2.

The DRX cycle 1 is longer than the DRX cycle 2, and one DRX cycle 1 includes a plurality of DRX cycles 2.

The start occasion of the DRX cycle 2 precedes the PDCCH monitoring start occasion of the DRX cycle 1, and the end occasion of the DRX cycle 1 also comes after the end occasion of the DRX cycle 2. Therefore, in the overlapping region of On-Duration1 of the DRX cycle 1 and On-Duration2 of the DRX cycle 2, the UE monitors the PDCCH in the following period: [the start occasion of the DRX cycle 2, the end occasion of the DRX cycle 1]. In the remaining time periods of the DRX cycle 1, since only On-Duration2 of the DRX cycle 2 is present, the UE only needs to monitor the PDCCH according to On-Duration2 of the DRX cycle 2.

### Embodiment 4

Fig. 11 is a schematic diagram of another DRX configuration mode according to an embodiment. As shown in Fig. 11, a traffic pattern of quasi-periodic traffic with uncertain arrival times (large jitter range) and a corresponding DRX configuration are described. The network configures the DRX cycle and PDCCH monitoring periods with two lengths (i.e., On-Duration), such as the first PDCCH monitoring period (DRX-OnDurationTimer1) and the second PDCCH monitoring period (DRX-OnDurationTimer2). The larger On-Duration covers the entire jitter range. Once there is data that needs to be received by the UE, the network sends a PDCCH channel or a transmission start indication, or a PDCCH monitoring start indication, or a wake up signal (WUS). If the data transmission stops, a transmission end indication or a PDCCH monitoring end indication or a sleep indication is sent.

Before receiving the PDCCH channel or the transmission start indication or the PDCCH monitoring start indication, or the WUS, the UE applies a smaller On-Duration, such as min{DRX-OnDurationTimer1, DRX-OnDurationTimer2}. The smaller On-Duration may be, for example, the first PDCCH monitoring period.

After receiving the PDCCH channel or the transmission start indication or the PDCCH monitoring start indication, or the WUS, until receiving the transmission end indication, PDCCH monitoring end indication, or Sleep indication, the UE applies a larger On-Duration, such as max{DRX-OnDurationTimer1, DRX-OnDurationTimer2}. The larger On-Duration may be, for example, the first PDCCH monitoring period.

Alternatively, before receiving the PDCCH channel, or the transmission start indication or the PDCCH monitoring start indication, or the wake up signal, the PDCCH is monitored within the first PDCCH monitoring period; and after receiving the transmission start indication or the PDCCH monitoring start indication, or the wake up signal, the PDCCH is monitored within the first PDCCH monitoring period and the second PDCCH monitoring period.

Alternatively, within a first DRX cycle after the PDCCH channel, the transmission start indication or the PDCCH monitoring start indication, or the wake up signal is received, the PDCCH is monitored within the first PDCCH monitoring period, and the PDCCH is monitored within the second PDCCH monitoring period within each DRX cycle other than the first DRX cycle.

Alternatively, within the first DRX cycle, the PDCCH is monitored within the first PDCCH monitoring period, and within the second DRX cycle, the PDCCH is monitored within the second PDCCH monitoring period.

Alternatively, if data is successfully received within one DRX cycle, the PDCCH is monitored within the first PDCCH monitoring period and the second PDCCH monitoring period, or, the PDCCH is monitored within the second PDCCH monitoring period.

Alternatively, the PDCCH is monitored within the first PDCCH monitoring period, and if the PDCCH is detected or the data is successfully received or a PDCCH corresponding to a PDSCH is detected, the PDCCH is monitored within the first PDCCH monitoring period and the second PDCCH monitoring period, or, the PDCCH is monitored within the second PDCCH monitoring period.

Further, when the UE monitors the PDCCH within the first PDCCH monitoring period, parameters of the first PDCCH search space are adopted for PDCCH monitoring (e.g., using a PDCCH monitoring interval of the first PDCCH search space and a continuous PDCCH monitoring duration of the first PDCCH search space). When the UE monitors the PDCCH within the second PDCCH monitoring period, parameters of the second PDCCH search space are adopted for PDCCH monitoring (e.g., using a PDCCH monitoring interval of the second PDCCH search space and a continuous PDCCH monitoring duration of the second PDCCH search space).

Fig. 12 is a schematic diagram of a DRX configuration mode according to an embodiment. Fig. 12 illustrates a traffic pattern of quasi-periodic traffic with uncertain arrival times (large jitter range) and a corresponding DRX configuration, which may be considered as a variation embodiment of Fig. 11. As shown in Fig. 12, the network configures the DRX cycle and PDCCH monitoring periods with two lengths (i.e., On-Duration), such as DRX-OnDurationTimer1 and DRX-OnDurationTimer2. The larger On-Duration covers the entire jitter range and the ramping-down step (i.e., On-Duration Ramping-down Step) of the PDCCH monitoring period. Once there is data that needs to be received by the UE, the network sends a PDCCH channel or a transmission start indication, or a PDCCH monitoring start indication, or a WUS. If the data transmission stops, the PDCCH channel, or the transmission end indication, or the PDCCH monitoring end indication, or a go-to-sleep indication is sent.

Before receiving the PDCCH channel or the transmission start indication or the PDCCH monitoring start indication, or the WUS, the UE applies a smaller On-Duration, such as min{DRX-OnDurationTimer1, DRX-OnDurationTimer2}.

Within a first DRX cycle after receiving the PDCCH channel or the transmission start indication or the PDCCH monitoring start indication, or the WUS, the UE applies a larger On-Duration, such as max{DRX-OnDurationTimer1, DRX-OnDurationTimer2}. If data is successfully received, the length of the On-Duration is reduced in the next DRX cycle according to the configured On-Duration ramping-down step. That is, if the data is successfully received within any DRX cycle, the specified length corresponding to the next DRX cycle of the DRX cycle is a result obtained by subtracting the ramping-down step from the length of the PDCCH monitoring period within the DRX cycle. If no data is successfully received within any DRX cycle and the data transmission stop indication is not received (it may be understood as a miss), the longest On-Duration is restored within the next DRX cycle, that is, the specified length corresponding to the next DRX cycle of the DRX cycle is restored to the longer one of the two lengths, such as max{DRX-OnDurationTimer1, DRX-OnDurationTimer2}.If the data transmission stop indication is received, the UE applies a smaller On-Duration, such as min{DRX-OnDurationTimer1, DRX-OnDurationTimer2}.

The UE reduces the length of On-Duration according to the configured ramping-down step, and the minimum length cannot be lower than the configured min{DRX-OnDurationTimer1, DRX-OnDurationTimer2}. That is, the specified length corresponding to each DRX cycle is greater than or equal to the shorter one of the two lengths.

In some embodiments, the DRX cycle is configured as 16 ms, and the two lengths of On-Duration are 2 ms and 8 ms, respectively, where 8 ms can cover the jitter range. The On-Duration ramping-down step is configured as 2 ms. Within the first DRX cycle (i.e., DRX cycle 1) after receiving the data transmission start indication, the UE applies the maximum On-Duration of 8 ms. If the data is successfully received, the UE applies, within the next DRX cycle (i.e., DRX cycle 2), the On-Duration length of 8 ms - 2 ms = 6 ms. If the data is successfully received within the DRX cycle 2, the ramping-down step continues to be reduced to 8 ms - 2 ms - 2 ms = 4 ms in the next DRX cycle (i.e., DRX cycle 3), with a minimum reduction to the configured minimum On-Duration length of 2 ms. If the On-Duration length is reduced, within the DRX cycle 4, to the minimum value of 2 ms and the UE fails to successfully monitor the data during the On-Duration of the DRX, the longest On-Duration monitoring is restored in the next DRX cycle. Based on this, it is determined whether the next DRX cycle continues to use the longest On-Duration or the On-Duration time is reduced, according to the ramping-down step with reference to the success or failure of reception until the transmission end indication is received.

### Embodiment 5

In this embodiment, resources of a PDCCH search space with a non-integer cycle are configured.

Within the previous DRX cycle, during the On-Duration or the period of [PDCCH monitoring start time, PDCCH monitoring end time], the UE monitors the PDCCH according to the monitoring of the PDCCH search space (i.e., Search Space). The PDCCH search space may be currently configured by adopting following parameters (similar to configurations of the DRX cycle), including: a monitoring cycle (measured in slot), a start offset position of the monitoring cycle (measured in slot), a monitoring duration (measured in slot), and the number of symbols monitored per slot (measured in symbol).

The monitoring cycle (slot) may only take several discrete integer values. For example, the monitoring slot periodicity and offset may be selected from the following:

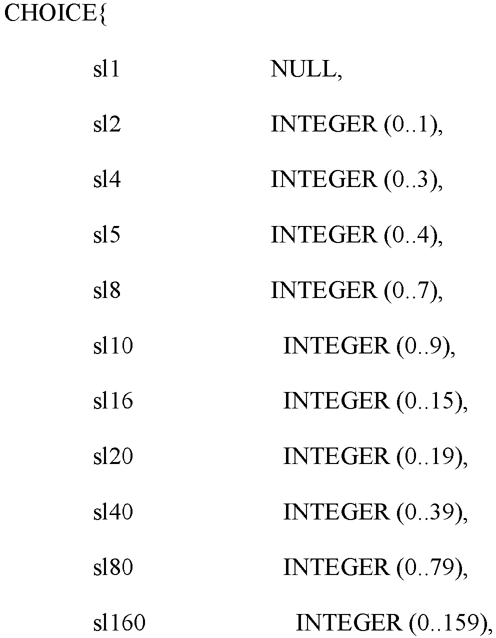

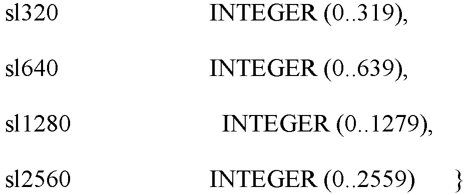

For example, if CHOICE selects sl1280 100, it indicates that the monitoring slot periodicity is 1280 slots, and the offset value range for the monitoring slot is 100.

In other words, the offset value for the PDCCH monitoring slot is related to the PDCCH monitoring cycle value. Moreover, the monitoring cycle may only take several discrete values, such as sl1, sl2, sl4, sl5, sl8, sl10, sl16, ..., sl1280, and sl2560.

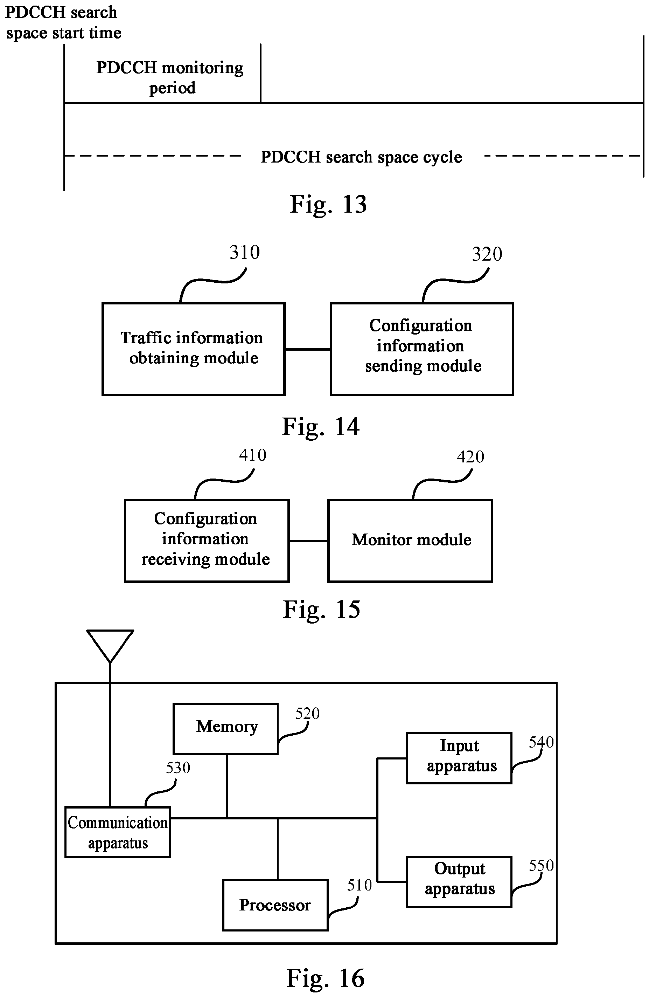

Therefore, when the traffic cycle is not an integer multiple of the monitoring cycle (slot), or the traffic cycle is not within the value range of the PDCCH monitoring cycle, or the On-Duration length of the PDCCH monitoring within the DRX cycle (i.e., PDCCH monitoring end time - PDCCH monitoring start time) is not an integer multiple of the monitoring cycle (slot), or no connection mode DRX is configured, it is necessary to consider the matching relationship between the PDCCH monitoring cycle and the On-Duration length of the PDCCH monitoring within the DRX cycle or the traffic cycle. For example, based on the length of the traffic cycle, it is not possible to configure a PDCCH monitoring cycle of sl1281. In this case, there are 2 following solutions:
(1) When there is an overlap between the PDCCH search space and the On-Duration within the DRX cycle:
   in the case of connection mode DRX cycle configuration, during the PDCCH monitoring period (i.e., On-Duration) within the DRX cycle, the UE starts to monitor the PDCCH from the start position of the PDCCH search space that first appears, and only monitors the PDCCH with the start position of the PDCCH search space falling within the On-Duration of the DRX cycle. That is, if the start position of the PDCCH search space falls outside the On-Duration, even if the PDCCH monitoring occasion of the PDCCH search space falls within the On-Duration of the DRX cycle, the PDCCH search space does not need to be monitored; and if the start position of the PDCCH search space falls within the On-Duration, even if the PDCCH monitoring occasion of the PDCCH search space falls outside the On-Duration of the DRX cycle, that PDCCH search space still needs to be monitored.
(2) Redefine the configuration strategy of the PDCCH search space to adapt to the problem about non-integer cycles. Refer to Fig. 13 for details.

Fig. 13 is a schematic diagram of another DRX configuration mode according to an embodiment. As shown in Fig. 13, the base station configures the UE with a PDCCH search space start time, a PDCCH monitoring duration (i.e., PDCCH Monitoring Period Duration), and a PDCCH search space cycle.

The PDCCH search space start time may be configured through an absolute time or based on a relative time offset (i.e. Offset) from a certain time.

Specifically, the PDCCH search space start time may be configured through the absolute time (SFN, subframe, and/or slot), or may be characterized based on the relative time offset (i.e., Time Offset) from the absolute time (a certain SFN, subframe, and/or slot). Specifically, the SFN, subframe, and/or slot may refer to a radio frame, subframe, and/or slot of the first transmission of a RRC message that configures the PDCCH search space. The relative time offset (i.e., Time Offset) represents a time interval from a reference SFN, subframe, and/or slot to the PDCCH search space start time.

The PDCCH search space cycles configured to the UE by the base station may be in one-to-one correspondence with traffic patterns of the UE. In this case, a cycle value range of the traffic is required to be completely consistent with a value range of the PDCCH search space cycle. For example, the PDCCH search space cycle may be measured in Hertz (Hz), frames per second (fps), milliseconds (ms), or microseconds (us), and may be a cycle characterized by any integer value within the value range.

Considering matching with the traffic pattern and explicit configuration (rather than being calculated) of the PDCCH search space cycle by the base station, the value range of the PDCCH search space cycle is not constrained by one SFN cycle (i.e., an integer factor of 10240 ms). The UE may calculate a start time of a next PDCCH search space cycle through a timer (an end time of a previous PDCCH search space cycle is the start time of the next PDCCH search space cycle).

If the traffic cycle is not an integer multiple of the base unit of the PDCCH search space cycle, the start position of the Nth PDCCH search space cycle = Floor (the start position of the first PDCCH search space cycle + (N-1) * Period). Floor represents flooring, N represents the Nth DRX cycle, and Period represents the traffic cycle or the cycle length of the PDCCH search space, which needs to be converted into the basic unit of the PDCCH search space cycle length (e.g., ms, slot, or symbol) during calculation.

The start position of the Nth PDCCH search space cycle may also be calculated according to the following:

The start position of the Nth PDCCH search space cycle = Ceil (the start position of the first PDCCH search space cycle + (N-1) * Period).

Alternatively, the start position of the Nth PDCCH search space cycle = Round (the start position of the first PDCCH search space cycle + (N-1) * Period), where Ceil represents ceiling, and Round represents rounding to the nearest integer.

Alternatively, the Nth PDCCH search space start time = the start time of the first DRX cycle + Floor ((N-1)* Period), that is, the start time of the Nth PDCCH search space cycle may be the sum of the start time of the first PDCCH search space cycle and a result of flooring the lengths of the N-1 traffic cycles.

Alternatively, the start time of the Nth PDCCH search space cycle =the start time of the first PDCCH search space cycle + Ceil ((N-1)* Period), that is, the start time of the Nth PDCCH search space cycle may be the sum of the start time of the first PDCCH search space cycle and a result of ceiling the lengths of the N-1 traffic cycles.

Alternatively, the start time of the Nth PDCCH search space cycle =the start time of the first PDCCH search space cycle + Round ((N-1)* Period), that is, the start time of the Nth PDCCH search space cycle may be the sum of the start time of the first PDCCH search space cycle and a PDCCH search space integer cycle closest to the lengths of the N-1 traffic cycles.

The unit of the PDCCH search space cycle may be ms, frame, subframe, slot, or symbol. In other words, the traffic cycle is first converted into the unit of the PDCCH search space cycle, and then flooring, ceiling, or rounding is performed to the start position with the unit of the PDCCH search space cycle.

If the traffic occurrence frequency is characterized by Hz or fps, reciprocal transformation is performed to obtain a corresponding PDCCH search space cycle. For example, the PDCCH search space cycle corresponding to x HZ is (1/x) s, and then is be converted into ms, symbol, or slot. Since 1 ms = 1 subframe, using ms and subframe as units are equivalent.

An embodiment of this application further provides a configuration apparatus. Fig. 14 is a structural schematic diagram of a configuration apparatus according to an embodiment. As shown in Fig. 14, the configuration apparatus includes: a traffic information obtaining module 310 and a configuration information sending module 320.

The traffic information obtaining module 310 is configured to acquire traffic information, where the traffic information includes a traffic cycle, a traffic burst arrival start time, and a traffic burst arrival end time.

The configuration information sending module 320 is configured to send configuration information relevant to PDCCH monitoring according to the traffic information, where the configuration information indicates a PDCCH monitoring occasion.

According to the configuration apparatus in this embodiment, the PDCCH monitoring occasion can be indicated according to the traffic information configuration without the limitation from the traffic cycle, the monitoring flexibility is improved, and energy conservation can be achieved for terminals with uncertain data packet transmission occasions or large-cycle traffic, and traffic cycles being not integer multiples of 10240 ms.

In an embodiment, the configuration information is configuration information for DRX, and the configuration information indicates a PDCCH monitoring start time, a PDCCH monitoring end time, and a DRX cycle length.

In an embodiment, the PDCCH monitoring start time is indicated by a first specified position and a first time offset. The first specified position includes a radio frame, a subframe, and/or a slot of the first transmission of a RRC message or a MAC control element CE including configuration information, or the first specified position includes a specified radio frame, subframe, and/or slot. The first time offset includes a time interval from the first specified position to the PDCCH monitoring start time.

The PDCCH monitoring end time is indicated according to a second specified position and a second time offset, where the second specified position includes the first specified position or the PDCCH monitoring start time; and the second time offset includes a time interval from the second specified position to the PDCCH monitoring end time.

In an embodiment, the apparatus further includes: a configuration module and a scheduling module.

The configuration module is configured to configure a periodic BSR resource or an SR indication resource within a monitoring period; or, determine an effective occasion of the periodic BSR resource or SR indication resource based on the PDCCH monitoring period; or, indicate an effective time period of the periodic BSR resource or SR indication resource through the configuration information, where the PDCCH monitoring period is a predefined time period after receiving the BSR or SR.

The scheduling module is configured to schedule, in the case of receiving the BSR or the SR, resources of an uplink PUSCH for carrying user plane data,
The periodic BSR resource or SR indication resource includes a periodic CG resource, a periodic non-contention PRACH resource, and/or an uplink physical signal for indicating the allocation of an uplink grant resource.

In an embodiment, the configuration information indicates a PDCCH monitoring start time and a DRX cycle length. The configuration information is further used for indicating a PDCCH monitoring end time, or a PDCCH monitoring period, or DRX inactivity timing information.

In an embodiment, the configuration information indicates a PDCCH monitoring start time, DRX inactivity timing information, and a DRX cycle length.

In an embodiment, the configuration information includes a plurality of sets of DRX configurations. Each set of DRX configuration includes a DRX cycle length and a corresponding initial offset. The occasion of monitoring the PDCCH is the union set of PDCCH monitoring occasions in individual DRX configuration.

In an embodiment, the configuration information includes a plurality of sets of DRX configurations. Each set of DRX configuration includes a PDCCH monitoring start time, a PDCCH monitoring end time, and a traffic cycle.

In an embodiment, the configuration information includes a DRX cycle and configuration information of a plurality of PDCCH monitoring periods within the DRX cycle. The configuration information of the plurality of PDCCH monitoring periods includes: a length of each PDCCH monitoring period, the number of the PDCCH monitoring periods, and/or an initial position of each PDCCH monitoring period.

In an embodiment, the configuration information includes a plurality of sets of DRX configurations. Each set of DRX configuration corresponds to a DRX-inactivity timer.

In an embodiment, the configuration information includes a DRX cycle and PDCCH monitoring periods with two lengths.

In an embodiment, the configuration information includes a DRX cycle, PDCCH monitoring periods with two lengths, and a ramping-down step for the PDCCH monitoring periods.

In an embodiment, the apparatus further includes: a first sending module and a second sending module.

The first sending module is configured to send, in the case of starting data transmission, a PDCCH or a transmission start indication or a PDCCH monitoring start indication, or a wake up signal.

The second sending module is configured to send, in the case of stopping data transmission, or a transmission end indication or a PDCCH monitoring end indication, or a sleep indication.

In an embodiment, the configuration information is a PDCCH search space configured by following parameters: a PDCCH search space start time, a PDCCH monitoring period, and a PDCCH search space cycle.

In an embodiment, the traffic information obtaining module 310 specifically includes: a first obtaining unit or a second obtaining unit.

The first obtaining unit is configured to acquire traffic information according to a QoS parameter transmitted by a core network.

The second obtaining unit is configured to acquire the traffic information according to assistance information of a terminal, an uplink RRC message, and/or an uplink MAC CE structure.

The configuration apparatus provided by this embodiment and the configuration method provided by the foregoing embodiment belong to the same inventive concept, and for technical details not described in detail in this embodiment, reference may be made to the foregoing any embodiment. This embodiment and the configuration method have the same beneficial effects.

An embodiment of this application further provides a channel monitoring apparatus. Fig. 15 is a structural schematic diagram of a channel monitoring apparatus according to an embodiment. As shown in Fig. 15, the channel monitoring apparatus includes: a configuration information receiving module 410 and a monitor module 420.

The configuration information receiving module 410 is configured to receive configuration information relevant to PDCCH monitoring, where the configuration information indicates a PDCCH monitoring occasion.

The monitor module 420 is configured to monitor a PDCCH according to the configuration information.

According to the channel monitoring apparatus in this embodiment, the PDCCH is monitored according to the configuration information indicating the PDCCH monitoring occasion without the limitation from the traffic cycle, the monitoring flexibility is improved, and energy conservation can be achieved for terminals with uncertain data packet transmission occasions or large-cycle traffic, and traffic cycles being not integer multiples of 10240 ms.

In an embodiment, the configuration information is configuration information for DRX, the configuration information indicates a PDCCH monitoring start time, a PDCCH monitoring end time, and a DRX cycle length.

The monitor module 420 specifically includes a first monitor unit.

The first monitor unit is configured to, within each DRX cycle, monitor the PDCCH within a specified time interval or monitor the PDCCH according to a first PDCCH search space, and not to monitor the PDCCH within a non-specified time interval or monitor the PDCCH according to a second PDCCH search space; or start to monitor, within each DRX cycle, the PDCCH after sending a BSR or RS, where the specified time interval is from a PDCCH monitoring start time to the completion of data packet transmission, or from the PDCCH monitoring start time to a PDCCH monitoring end time, or from sending the BSR or SR to the completion of data packet transmission, or from sending the BSR or SR to the PDCCH monitoring end time.

In an embodiment, a start time of an Nth DRX cycle is one of the following:
the sum of a start time of a first DRX cycle and a result of flooring N-1 traffic cycles;
the sum of the start time of the first DRX cycle and a result of ceiling the N-1 traffic cycles;
the sum of the start time of the first DRX cycle and an integer closest to the N-1 traffic cycles;
a result of flooring the sum of the start time of the first DRX cycle and the N-1 traffic cycles;
a result of ceiling the sum of the start time of the first DRX cycle and the N-1 traffic cycles; and
a DRX integer cycle position closest to the sum of the start time of the first DRX cycle and the N-1 traffic cycles.

In an embodiment, the configuration information indicates a PDCCH monitoring start time and a DRX cycle length. The configuration information further indicates a PDCCH monitoring end time, or a PDCCH monitoring period, or DRX inactivity timing information.

In an embodiment, the monitor module 420 specifically further includes: a second monitor unit.

The second monitor unit is configured to start to monitor the PDCCH from the PDCCH monitoring start time within each DRX cycle, and stop monitoring the PDCCH until any one of the following conditions is satisfied:
the PDCCH is monitored after the PDCCH monitoring start time, and the DRX-inactivity timer is turned after the HARQ ACK is received or fed back;
the PDCCH is monitored within the timing period of the DRX-inactivity timer, and the DRX-inactivity timer is restarted after the HARQ ACK is received or fed back;
the PDCCH is not monitored within the timing period of the DRX-inactivity timer, and the DRX-inactivity timer times out; and
the PDCCH monitoring end time expires, and the PDCCH is not monitored.

In an embodiment, the configuration information indicates a PDCCH monitoring start time, DRX inactivity timing information, and a DRX cycle length.

In an embodiment, the apparatus further includes: a start module, a restart module, and a stop module.

The start module is configured to start the DRX-inactivity timer after receiving or feeding back the HARQ ACK in a case that the PDCCH is monitored within each DRX cycle;

The restart module is configured to restart the DRX-inactivity timer after receiving or feeding back the HARQ ACK in a case that the PDCCH is monitored within the timing period of the DRX-inactivity timer.

The stop module is configured to stop monitoring the PDCCH after the DRX-inactivity timer times out in a case that the PDCCH is not monitored within the timing period of the DRX-inactivity timer.

In an embodiment, the configuration information includes a plurality of sets of DRX configurations.

The monitor module 420 specifically further includes: a sixth monitor unit.

The sixth monitor unit is configured to monitor the PDCCH at the PDCCH monitoring occasion included in individual DRX configuration.

In an embodiment, the configuration information includes configuration information for a first DRX cycle and configuration information for second DRX cycles, where the first DRX cycle includes multiple second DRX cycles.

The monitor module 420 specifically further includes: a seventh monitor unit and an eighth monitor unit.

The seventh monitor unit is configured to monitor, within each first DRX cycle, for overlapping regions of PDCCH monitoring periods within the first DRX cycle and the second DRX cycle, the PDCCH from the start occasion of an earlier starting PDCCH monitoring period to the end occasion of a later ending PDCCH monitoring period; and

The eighth monitor unit is configured to monitor, for non-overlapping regions, the PDCCH according to the PDCCH monitoring periods included in the second DRX cycle.

In an embodiment, the configuration information includes a DRX cycle, a first PDCCH monitoring period, and a second PDCCH monitoring period.

The monitor module 420 specifically further includes: a ninth monitor unit and a tenth monitor unit.

The ninth monitor unit is configured to monitor the PDCCH within the first PDCCH monitoring period before receiving a PDCCH channel or a transmission start indication or a PDCCH monitoring start indication, or a wake up signal.

The tenth monitor unit is configured to monitor the PDCCH within the second PDCCH monitoring period until a transmission end indication or a PDCCH monitoring end indication, or a sleep indication is received after receiving the PDCCH channel or the transmission start indication or the PDCCH monitoring start indication, or the wake up signal.

Alternatively, the monitor module 420 may be configured to monitor the PDCCH within the first PDCCH monitoring period before receiving the transmission start indication or the PDCCH monitoring start indication, or the wake up signal; and monitor the PDCCH within the first PDCCH monitoring period and the second PDCCH monitoring period after receiving the transmission start indication or the PDCCH monitoring start indication, or the wake up signal.

Alternatively, the monitor module 420 may be configured to monitor the PDCCH within the first PDCCH monitoring period within a first DRX cycle after receiving the transmission start indication or the PDCCH monitoring start indication, or the wake up signal, and monitor the PDCCH within the second PDCCH monitoring period within each DRX cycle other than the first DRX cycle.

Alternatively, the monitor module 420 may be configured to monitor, within the first DRX cycle, the PDCCH within the first PDCCH monitoring period, and monitor, within the second DRX cycle, the PDCCH within the second PDCCH monitoring period.

Alternatively, the monitor module 420 may be configured to monitor the PDCCH within the first PDCCH monitoring period and the second PDCCH monitoring period if data is successfully received within one DRX cycle, or, monitor the PDCCH within the second PDCCH monitoring period.

Alternatively, the monitor module 420 may be configured to monitor the PDCCH within the first PDCCH monitoring period, monitor the PDCCH within the first PDCCH monitoring period and the second PDCCH monitoring period if the PDCCH is detected or the data is successfully received or a PDCCH corresponding to a PDSCH is detected, or, monitor the PDCCH within the second PDCCH monitoring period.

The first DRX cycle includes one or more DRX cycles, and the second DRX cycle includes one or more DRX cycles.

In an embodiment, the configuration information includes a DRX cycle, PDCCH monitoring periods with two lengths, and a ramping-down step for the PDCCH monitoring period.

The monitor module 420 specifically further includes: an eleventh monitor unit and a twelfth monitor unit, and a thirteenth monitor unit.

The eleventh monitor unit is configured to monitor the PDCCH according to the shorter one of PDCCH monitoring periods with the two lengths before receiving the PDCCH channel or the transmission start indication or the PDCCH monitoring start indication, or the wake up signal.

The twelfth monitor unit is configured to monitor the PDCCH according to the longer one of PDCCH monitoring periods with the two lengths within the first DRX cycle after receiving the PDCCH channel or the transmission start indication or the PDCCH monitoring start indication, or the wake up signal, and monitor the PDCCH using the corresponding PDCCH monitoring period with a specified length within each DRX cycle other than the first DRX cycle.

The thirteenth monitor unit is configured to monitor the PDCCH according to the shorter PDCCH monitoring period in a case that the data transmission stop indication is received.

In a case that the data is successfully received within any DRX cycle, the specified length corresponding to the next DRX cycle of the DRX cycle is a result obtained by subtracting a ramping-down step from the length of the PDCCH monitoring period within the DRX cycle; in a case that the data is not successfully received within any DRX cycle and the data transmission stop indication is not received, the specified length corresponding to the next DRX cycle of the DRX cycle is recovered to the longer one of the two lengths; and the specified length corresponding to each DRX cycle is greater than or equal to the shorter one of the two lengths.

In an embodiment, the monitor module 420 specifically further includes: a fourteenth monitor unit.

The fourteenth monitor unit is configured to start to monitor, within the PDCCH monitoring period of each DRX cycle, PDCCHs satisfying conditions from a start position of a first PDCCH search space, where the PDCCHs satisfying the conditions include a PDCCH with a search space start position falling within the PDCCH monitoring period of the corresponding DRX cycle.

In an embodiment, the apparatus further includes: a determination module.

The determination module is configured to determine a PDCCH search space according to following parameters: a PDCCH search space start time, a PDCCH monitoring period, and a PDCCH search space cycle.

The channel monitoring apparatus provided by this embodiment and the channel monitoring method provided by the foregoing embodiment belong to the same inventive concept, and for technical details not described in detail in this embodiment, reference may be made to the foregoing any embodiment. This embodiment and the channel monitoring method have the same beneficial effects.

An embodiment of this application further provides a communication node. The communication node may be a base station or terminal. Fig. 16 is a schematic diagram of a hardware structure of a communication node according to an embodiment. As shown in Fig. 16, the communication node provided by this application includes a memory 520, a processor 510, and a computer program stored on the memory and running on the processor. The processor 510, when executing the program, implements the above configuration method or the above channel monitoring method.

The communication node may further include the memory 520. There may be one or more processors 510 in the communication node. In Fig. 16, one processor 510 is taken as an example. The memory 520 is configured to store one or more programs. The one or more programs are executed by the one or more processors 510, so as to make the one or more processors 510 implement the configuration method or the channel monitoring method according to this embodiment of this application.

The communication node further includes: a communication apparatus 530, an input apparatus 540, and output apparatus 550.

The processor 510, the memory 520, the communication apparatus 530, the input apparatus 540, and the output apparatus 550 in the communication node may be connected through a bus or other methods, and bus connection is taken as an example in Fig. 16.

The input apparatus 540 may be configured to receive inputted number or character information so as to generate key signal inputs relevant to user settings and function control of the communication node. The output apparatus 550 may include display devices such as a display screen.

The communication apparatus 530 may include a receiver and a transmitter. The communication apparatus 530 is configured to perform information receiving and sending communication based on control of the processor 510.

The memory 520, as a computer-readable storage medium, may be configured to store a software program, a computer executable program, and a module, such as program instructions/modules (e.g., the traffic information obtaining module 310 and the configuration information sending module 320 in the configuration apparatus) corresponding to the configuration method in this embodiment of this application; or program instructions/modules (e.g., the configuration information receiving module 410 and the monitor module 420 in the channel monitoring apparatus) corresponding to the channel monitoring method in this embodiment of this application. The memory 520 may include a program storage zone and a data storage zone, where the program storage zone may store an operating system and an application needed by at least one function; and the data storage zone may store data, etc. established according to usage of the communication node. In addition, the memory 520 may include a high-speed random access memory and may further include a nonvolatile memory, such as at least one disk memory device, a flash memory, or other nonvolatile solid state memory devices. In some examples, the memory 520 may further include memories remotely disposed relative to the processor 510, and these remote memories may be connected to the communication node through networks. The examples of the above networks include but not limited to an Internet, an intranet, a local area network, a mobile communication network, and a combination thereof.

An embodiment of this application further provides a storage medium. The storage medium stores a computer program. The computer program, when executed by a processor, implements the configuration method or channel monitoring method according to any one of the embodiments of this application. The configuration method includes the following: traffic information is acquired, and includes a traffic cycle, a traffic burst arrival start time, and a traffic burst arrival end time; and configuration information relevant to PDCCH monitoring is sent according to the traffic information, and the configuration information indicates a PDCCH monitoring occasion. The channel monitoring method includes the following: configuration information relevant to PDCCH monitoring is received, where the configuration information indicates a PDCCH monitoring occasion; and a PDCCH is monitored according to the configuration information.

The computer storage medium of this embodiment of this application may adopt any combination of one or more computer-readable media. The computer-readable medium may be a computer-readable signal medium or a computer-readable storage medium. For example, the computer-readable storage medium may include but not limited to: electrical, magnetic, optical, electromagnetic, infrared, or semiconductor systems, apparatuses, or devices, or any combination thereof. More specific examples (non-exhaustive list) of the computer-readable storage medium include: an electrical connection with one or more wires, a portable computer disk, a hard drive, a random access memory (RAM), a read only memory (ROM), an erasable programmable read only memory (EPROM), a flash, fiber optics, a portable compact disc read only memory (CD-ROM), an optical storage device, a magnetic storage device, or any proper combination of the above. The computer-readable storage medium may be any tangible medium including or storing a program, and the program may be used by an instruction execution system, apparatus, or device, or used in conjunction with the instruction execution system, apparatus, or device.

The computer-readable signal medium may include data signals propagated in a base band or propagated as a part of a carrier wave, which bear computer-readable program code. The propagated data signals may have a plurality of forms, including but not limited to electromagnetic signals, optical signals, or any proper combination of the above. The computer-readable signal medium may be any computer-readable medium except the computer-readable storage medium. The computer-readable medium may send, propagate, or transmit programs used by the instruction execution system, apparatus, or device or used in conjunction with the instruction execution system, apparatus, or device.

The program code included in the computer-readable medium may be transmitted by any proper medium, including but not limited to wireless, a wire, an optical cable, radio frequency (RF), etc., or any proper combination of the above.

The computer program code for executing the operations of this application may be written in one or more programming languages or a combination thereof. The programming languages include object-oriented programming languages such as Java, Smalltalk, C++, as well as conventional procedural programming languages, such as "C" or similar programming languages. The program code may be executed entirely on a user computer, partly on the user computer, as a stand-alone software package, partly on the user computer and partly on a remote computer, or entirely on a remote computer or a server. In the case of involving the remote computer, the remote computer may be connected to the user computer via any type of network, including a local area network (LAN) or wide area network (WAN), or may be connected to an external computer (e.g., utilizing an Internet service provider for Internet connectivity).

The foregoing descriptions are merely some embodiments of this application, and are not intended to limit the scope of protection of this application.

Those skilled in the art should understand that the term "user terminal" covers any suitable type of wireless user device, such as mobile phones, portable data processing apparatuses, portable web browsers, or in-vehicle mobile stations.

Typically, various embodiments of this application can be implemented in hardware or dedicated circuits, software, logic, or any combination thereof. For example, some aspects may be implemented in hardware, while other aspects may be implemented in firmware or software executable by a controller, microprocessor, or other computing device, although this application is not limited to this.

This embodiment of this application may be implemented by executing computer program instructions through a data processor of a mobile device, such as in a processor entity, or by hardware, or by a combination of software and hardware. The computer program instructions may be assembly instructions, instruction set architecture (ISA) instructions, machine instructions, machine-dependent instructions, microcode, firmware instructions, status setting data, or source code or object code written in any combination of one or more programming languages.

Any block diagram of a logical flow in the accompanying drawings of this application may represent program steps, or may represent interconnected logical circuits, modules, and functions, or may represent a combination of the program steps, the logical circuits, the modules, and the functions. The computer program may be stored in the memory. The memory may be of any type suitable for the local technical environment and can be implemented using any suitable data storage technology, for example, including but not limited to, a read-only memory (ROM), a random access memory (RAM), an optical memory apparatus and system(a digital video disc (DVD), or a compact disk (CD), etc.).The computer-readable medium may include a non-transitory storage medium. The data processor may be of any type suitable for the local technical environment, for example, including but not limited to, a general-purpose computer, a special-purpose computer, a microprocessor, a digital signal processing (DSP), an application specific integrated circuit (ASIC), a field-programmable gate array (FPGA), and a processor based on a multi-core processor architecture.

Through exemplary and non-limiting examples, a detailed description of exemplary embodiments of this application has been provided above. However, when considering the accompanying drawings and claims, it is obvious to those skilled in the art that various modifications and adjustments to the above embodiments can be made without departing from the scope of this application. Therefore, the proper scope of this application is determined according to the claims.

## Claims

1. A configuration method, comprising:
acquiring traffic information, the traffic information comprising a traffic cycle, a traffic burst arrival start time, and a traffic burst arrival end time; and
sending configuration information relevant to physical downlink control channel (PDCCH) monitoring according to the traffic information, the configuration information indicating a PDCCH monitoring occasion.

2. The method according to claim 1, wherein the configuration information is configuration information for discontinuous reception (DRX), the configuration information indicates a PDCCH monitoring start time, a PDCCH monitoring end time, and a DRX cycle length.

3. The method according to claim 2, wherein
the PDCCH monitoring start time is indicated by a first specified position and a first time offset, wherein
the first specified position comprises a radio frame, a subframe, and/or a slot of a first transmission of a radio resource control (RRC) message or a medium access control (MAC) control element (CE), or the first specified position comprises a specified radio frame, subframe, and/or slot;
the first time offset comprises a time interval from the first specified position to the PDCCH monitoring start time;
the PDCCH monitoring end time is indicated according to a second specified position and a second time offset, wherein
the second specified position comprises the first specified position or the PDCCH monitoring start time; and
the second time offset comprises a time interval from the second specified position to the PDCCH monitoring end time.

4. The method according to claim 1, further comprising:
configuring a periodic buffer status report (BSR) resource or a scheduling request (SR) indication resource within a PDCCH monitoring period; or determining an effective occasion of the periodic BSR resource or SR indication resource based on the PDCCH monitoring period; or indicating an effective time period of the periodic BSR resource or SR indication resource through the configuration information, the PDCCH monitoring period being a predefined time period after receiving a BSR or SR; and
the method further comprises: scheduling, in the case of receiving the BSR or SR, resource of an uplink physical uplink shared channel (PUSCH) for carrying user plane data,
wherein the periodic BSR resource or SR indication resource comprises a periodic configured grant (CG) resource, a periodic non-contention physical random access channel (PRACH) resource, and/or an uplink physical signal for indicating allocation of an uplink grant resource.

5. The method according to claim 1, wherein the configuration information indicates a PDCCH monitoring start time and a DRX cycle length; and
the configuration information further indicates a PDCCH monitoring end time, a PDCCH monitoring period, or DRX inactivity timing information.

6. The method according to claim 1, wherein the configuration information indicates a PDCCH monitoring start time, DRX inactivity timing information, and a DRX cycle length.

7. The method according to claim 1, wherein the configuration information comprises a plurality of sets of DRX configurations, and each set of DRX configuration comprises a DRX cycle length and a corresponding initial offset; and
wherein an occasion of monitoring a PDCCH is an union set of PDCCH monitoring occasions in individual DRX configuration.

8. The method according to claim 1, wherein the configuration information comprises a plurality of sets of DRX configurations, and each set of DRX configuration comprises a PDCCH monitoring start time, a PDCCH monitoring end time, and a traffic cycle.

9. The method according to claim 1, wherein the configuration information comprises a DRX cycle and configuration information of a plurality of PDCCH monitoring periods within the DRX cycle; and
the configuration information of the plurality of PDCCH monitoring periods comprises: a length of each of the plurality of PDCCH monitoring periods, a number of the plurality of PDCCH monitoring periods, and/or an initial position of each of the plurality of PDCCH monitoring periods.

10. The method according to claim 1, wherein the configuration information comprises a plurality of sets of DRX configurations, and each set of DRX configuration corresponds to a DRX-inactivity timer.

11. The method according to claim 1, wherein the configuration information comprises a DRX cycle and PDCCH monitoring periods with two lengths.

12. The method according to claim 1, wherein the configuration information comprises a DRX cycle, PDCCH monitoring periods with two lengths, and a ramping-down step for the PDCCH monitoring periods.

13. The method according to claim 11 or 12, further comprising:
sending, in the case of starting data transmission, a PDCCH or a transmission start indication, or a PDCCH monitoring start indication, or a wake up signal; and
sending, in the case of stopping data transmission, a transmission end indication, or a PDCCH monitoring end indication, or a sleep indication.

14. The method according to claim 1, wherein the configuration information is a PDCCH search space configured by following parameters:
a PDCCH search space start time;
a PDCCH monitoring period; and
a PDCCH search space cycle.

15. The method according to claim 1, wherein acquiring the traffic information comprises:
acquiring the traffic information according to a quality of service (QoS) parameter transmitted by a core network; or
acquiring the traffic information according to assistance information of a terminal, an uplink RRC message, and/or an uplink MAC CE structure.

16. A channel monitoring method, comprising:
receiving configuration information relevant to physical downlink control channel (PDCCH) monitoring, the configuration information indicating a PDCCH monitoring occasion; and
monitoring a PDCCH according to the configuration information.

17. The method according to claim 16, wherein the configuration information is configuration information for discontinuous reception (DRX), and the configuration information indicates a physical downlink control channel (PDCCH) monitoring start time, a PDCCH monitoring end time, and a DRX cycle length; and
wherein monitoring the PDCCH according to the configuration information comprises:
within each DRX cycle, monitoring the PDCCH within a specified time interval or monitoring the PDCCH according to a first PDCCH search space, and not monitoring the PDCCH within a non-specified time interval or monitoring the PDCCH according to a second PDCCH search space; or
starting to monitor, within each DRX cycle, the PDCCH after sending a BSR or RS,
wherein the specified time interval is from a PDCCH monitoring start time to the completion of data packet transmission, or from the PDCCH monitoring start time to a PDCCH monitoring end time, or from sending the BSR or SR to the completion of data packet transmission, or from sending the BSR or SR to the PDCCH monitoring end time.

18. The method according to claim 17, wherein a start time of an Nth DRX cycle is one of the following:
a sum of a start time of a first DRX cycle and a result of flooring N-1 traffic cycles;
a sum of the start time of the first DRX cycle and a result of ceiling the N-1 traffic cycles;
a sum of the start time of the first DRX cycle and an integer closest to the N-1 traffic cycles;
a result of flooring a sum of the start time of the first DRX cycle and the N-1 traffic cycles;
a result of ceiling a sum of the start time of the first DRX cycle and the N-1 traffic cycles; or
a DRX integer cycle position closest to a sum of the start time of the first DRX cycle and the N-1 traffic cycles.

19. The method according to claim 16, wherein
the configuration information indicates a PDCCH monitoring start time and a DRX cycle length; and
the configuration information further indicates a PDCCH monitoring end time, or a PDCCH monitoring period, or DRX inactivity timing information.

20. The method according to claim 19, wherein monitoring the PDCCH according to the configuration information comprises:
starting to monitor the PDCCH from the PDCCH monitoring start time within each DRX cycle, and stop monitoring the PDCCH until any one of the following conditions is satisfied:
the PDCCH is monitored after the PDCCH monitoring start time, and a DRX-inactivity timer is turned on after receiving or feeding back hybrid automatic repeat request (HARQ) acknowledge (ACK);
the PDCCH is monitored within a timing period of the DRX-inactivity timer, and the DRX-inactivity timer is restarted after receiving or feeding back the HARQ ACK;
the PDCCH is not monitored within the timing period of the DRX-inactivity timer, and the DRX-inactivity timer times out; or
the PDCCH monitoring end time expires, and the PDCCH is not monitored.

21. The method according to claim 16, wherein the configuration information indicates a PDCCH monitoring start time, DRX inactivity timing information, and a DRX cycle length.

22. The method according to claim 21, further comprising one of the following: within each DRX cycle,
in a case that the PDCCH is monitored, starting a DRX-inactivity timer after receiving or feeding back a HARQ ACK;
in a case that the PDCCH is monitored within a timing period of the DRX-inactivity timer, restarting the DRX-inactivity timer after receiving or feeding back the HARQ ACK; or
in a case that the PDCCH is not monitored within the timing period of the DRX-inactivity timer, stopping monitoring the PDCCH after the DRX-inactivity timer times out.

23. The method according to claim 16, wherein the configuration information comprises a plurality of sets of DRX configurations; and
wherein monitoring the PDCCH according to the configuration information comprises:
monitoring the PDCCH at a PDCCH monitoring occasion included in each of the individual DRX configuration.

24. The method according to claim 16, wherein the configuration information comprises configuration information for a first DRX cycle and configuration information for second DRX cycles, and the first DRX cycle comprises multiple second DRX cycles; and
wherein monitoring the PDCCH according to the configuration information comprises: within each first DRX cycle,
monitoring, for an overlapping region of a PDCCH monitoring period within the first DRX cycle and a PDCCH monitoring period within the second DRX cycle, the PDCCH from a start occasion of an earlier starting PDCCH monitoring period to an end occasion of a later ending PDCCH monitoring period; and
monitoring, for a non-overlapping region, the PDCCH according to the PDCCH monitoring period included in the second DRX cycle.

25. The method according to claim 16, wherein the configuration information comprises a DRX cycle, a first PDCCH monitoring period, and a second PDCCH monitoring period; and
wherein monitoring the PDCCH according to the configuration information comprises:
before receiving the PDCCH, a transmission start indication, a PDCCH monitoring start indication, or a wake up signal, monitoring the PDCCH within the first PDCCH monitoring period; and
after receiving the PDCCH, the transmission start indication, the PDCCH monitoring start indication, or the wake up signal, monitoring the PDCCH within the second PDCCH monitoring period until a transmission end indication or a PDCCH monitoring end indication, or a sleep indication is received.

26. The method according to claim 16, wherein the configuration information comprises a DRX cycle, PDCCH monitoring periods with two lengths, and a ramping-down step for the PDCCH monitoring periods;
wherein monitoring the PDCCH according to the configuration information comprises:
monitoring the PDCCH according to a shorter one PDCCH monitoring period of the PDCCH monitoring periods with two lengths before receiving the PDCCH, or the transmission start indication, or the PDCCH monitoring start indication, or the wake up signal;
monitoring the PDCCH according to a longer one PDCCH monitoring period of the PDCCH monitoring periods with two lengths within a first DRX cycle after receiving the PDCCH, the transmission start indication, the PDCCH monitoring start indication, or the wake up signal, and monitoring the PDCCH using the corresponding PDCCH monitoring period with a specified length within each DRX cycle other than the first DRX cycle; and
in a case that the data transmission stop indication is received, monitoring the PDCCH according to the shorter PDCCH monitoring period,
wherein in a case that data is successfully received within any DRX cycle, the specified length corresponding to a next DRX cycle of the DRX cycle is a result obtained by subtracting the ramping-down step from the length of the PDCCH monitoring period within the DRX cycle;
wherein in a case that the data is not successfully received within any DRX cycle and the data transmission stop indication is not received, the specified length corresponding to the next DRX cycle of the DRX cycle is recovered to the longer one of the two lengths; and
wherein the specified length corresponding to each of the DRX cycles is greater than or equal to the shorter one of the two lengths.

27. The method according to claim 16, wherein monitoring the PDCCH according to the configuration information comprises:
starting to monitor, within a PDCCH monitoring period of each DRX cycle, a PDCCH satisfying a condition from a start position of a first PDCCH search space, the PDCCH satisfying the condition comprising a PDCCH with a search space start position falling within the PDCCH monitoring period of the corresponding DRX cycle.

28. The method according to claim 16, further comprising:
determining a PDCCH search space according to following parameters:
a PDCCH search space start time;
a PDCCH monitoring period; and
a PDCCH search space cycle.

29. A communication node, comprising a memory, a processor, and a computer program stored on the memory and executable on the processor, wherein the processor, when executing the program, implements the configuration method according to any one of claims 1 to 15, or the channel monitoring method according to any one of claims 16 to 28.

30. A computer-readable storage medium, storing a computer program thereon, wherein the program, when executed by a processor, implements the configuration method according to any one of claims 1 to 15, or the channel monitoring method according to any one of claims 16 to 28.
